# EUROPEAN PATENT APPLICATION

(11) **EP 1 150 529 A1**
(43) Date of publication of application: **31.10.2001**
(21) Application number: 00309842.3
(22) Date of filing: 06.11.2000
(51) Int. Cl.: H04Q 7/38

(54) **System and method for registering a wireless unit at the border between geographic service areas**

(30) Priority: 28.04.2000 US 561539
(71) Applicant: LUCENT TECHNOLOGIES INC., Murray Hill, New Jersey 07974-0636 (US)
(72) Inventor: Newell, James D., Aurora, Illinois (US); Smith, Harold Robert Jr., Oakbrook Terrace, Illinois 60181 (US)
(74) Representative: Buckley, Christopher Simon Thirsk

(57) **Abstract**

An inter-system registration system involves retaining the registration information of a wireless unit (42) in a visited system (43) when the wireless unit (42) registers in another system, so the registration information can be used if the wireless unit (42) returns to the visited system (43). For example, when the wireless unit (42) registers with the other system, such as a second visited system for a second geographic service area (47,49), the registration system can delay the deleting of the registration information of the wireless unit at the visited system, such as a first visited system (43) for a first geographic service area. After receiving the registration cancellation from a home system (47), the first visited system (43) for the first geographic service area can time stamp the registration information for the wireless unit (42) and retain the registration information for the wireless unit (42) for at least an interval of time. If the wireless unit returns to the first geographic service area, the first visited system (43) uses the registration information retained for the wireless unit (42). Accordingly, the wireless unit's profile need not be sent to the first visited system (43), and the first visited system (43) need not be updated again.

## Description

### BACKGROUND OF THE INVENTION

### 1. Field of The Invention

This invention relates to wireless communications and, more particularly, to a system and method for registering a wireless unit at the border between a first geographic service area and a second geographic service area.

### 2. Description of Related Art

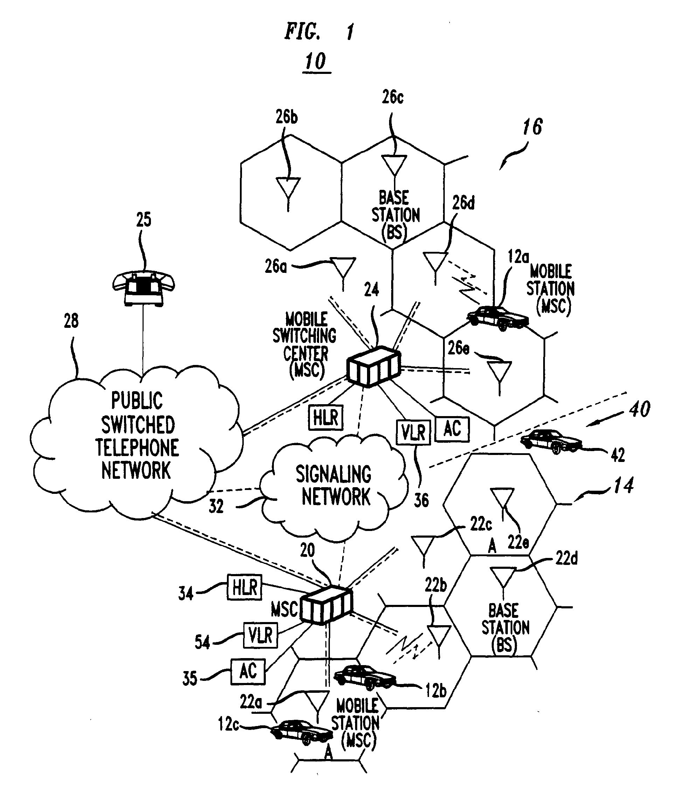

FIG. 1 depicts a schematic diagram of a wireless communications system 10 which provides wireless communications services to a number of wireless units (e.g., wireless units 12a-c) that are situated within geographic service area or regions 14 and 16. A Mobile Switching Center (e.g. MSCs 20 and 24) is responsible for, among other things, establishing and maintaining calls between the wireless units and calls between a wireless unit and a wireline unit (e.g., wireline unit 25). As such, the MSC interconnects the wireless units within its geographic region with a public switched telephone network (PSTN) 28. The geographic area serviced by the MSC is divided into spatially distinct areas called "cells." As depicted in FIG. 1, each cell is schematically represented by one hexagon in a honeycomb pattern; in practice, however, each cell has an irregular shape that depends on the topography of the terrain surrounding the cell, and cell boundaries typically overlap. Typically, each cell contains a base station (e.g. base stations 22a-e and 26a-e), which comprises the radios and antennas that the base station uses to communicate with the wireless units in that cell. The base stations also comprise the transmission equipment that the base station uses to communicate with the MSC in the geographic area. For example, the MSC 20 is connected to the base stations 22a-e in the geographic service area 14, and an MSC 24 is connected to the base stations 26a-e in the geographic service area 16.

The MSCs 20 and 24 use a signaling network 32, which enables the exchange of information about the wireless units within the respective geographic service areas 14 and 16, for location validation and call delivery to wireless units which are roaming in other geographic service areas. For example, a wireless unit 12a is roaming when the wireless unit 12a leaves the geographic service area 14 of the MSC 20 to which it was originally assigned (e.g. home MSC) and enters the geographic service area 16 of the MSC 24. To ensure that a roaming wireless unit can receive a call, the roaming wireless unit 12a registers with the MSC 24 in which it presently resides (e.g., the visited MSC) by notifying a visited MSC 24 of its presence. Once the roaming wireless unit 12a is identified by the visited MSC 24, the visited MSC 24 sends a registration notification to the home MSC 20 over the signaling network 32. After the identity of the wireless unit 12a is verified, the home MSC 20 updates a database 34, referred to as the home location register (HLR), with the identification information of the visited MSC 24 to which the wireless unit 12a is registered, thereby providing the location of the roaming wireless unit 12a to the home MSC 20.

The HLR 34 contains subscriber information and location information for all wireless units which reside in the geographic area 14 of the MSC 20. The HLR 34 can include a mobile identification number (MIN) or International Mobile Subscriber Identification Number (IMSI), the mobile directory number (MDN), and/or an electronic serial number (ESN) for each of the wireless units. An authentication center (AC) 35 authenticates a wireless unit by using the MIN/IMSI and ESN of the wireless unit and data stored in the HLR 34. After the roaming wireless unit is authenticated, the home MSC 20 provides to the visited MSC 24 a customer profile or registration information which indicates the features available to the roaming wireless unit, such as call waiting, caller id, call forwarding, three-way-calling, and international dialing access. Upon receiving the customer profile or registration information, the visited MSC 24 creates an entry for the wireless unit 12a in a database 36, referred to as the visitor location register (VLR), to provide the same features to the wireless unit 12a as the home MSC 20.

When a wireless unit 42 roams into the geographic area 16, the wireless unit 42 attempts to register in the geographic service area 16 of the MSC 24. For the wireless unit 42 to register with the MSC 24 of the geographic service area 16, the MSC 24 sends a Registration Notification to the wireless unit 42's home MSC. If the MSC 24 is different than the MSC identified in the Last Seen Pointer (LSP) of the HLR, which stores the location of the last registration for the wireless unit, the HLR sends a registration cancellation to the MSC identified in the LSP, which can be referred to as the previous visited system with which the wireless unit was registered. The HLR then updates the LSP with the new location information of the MSC 24. After receiving the registration cancellation, the VLR of the previous visited system deletes the entry for the wireless unit 42. The HLR sends a message containing the wireless unit's registration information, such as the wireless unit's customer profile, to the current MSC 24, so VLR 36 can create an entry for the wireless unit 42 with the wireless unit 42's registration information. A typical registration between geographic service areas is described in the standard designated as TIA/EIA-41-D, "Cellular Radiotelecommunications Intersystem Operations," December 1997 ("IS-41").

Wireless units active in a border zone 40 between the geographic service area 14 of the MSC 20 and the geographic service region 16 of the MSC 24 can register alternately and at a rapid rate between the two MSCs 20 and 24, which can be referred to as a ping-pong effect. This ping-pong effect between the MSCs 20 and 24 can occur because of the radio transmission paths between the wireless unit and cells of the different MSCs being affected by a variety of conditions, for example environmental conditions (such as weather) or physical conditions (such as geography, buildings or even the passage of trucks between the wireless unit and the cell). Significant resources can be occupied in performing the successive registrations between the MSCs 20 and 24. For example, in performing the registrations, resources are used to send and receive messages and associated processing is required to process the messages.

In the message from the HLR to the VLR 36, the majority of the size of the received message is the wireless unit 42's profile and the majority of the processor time used is in creating entries in the VLR 36 for the wireless unit 42. Because of the ping-pong effect, the MSC 24 registering the wireless unit 42 may have just recently deleted the VLR entry or registration information for the wireless unit 42 and now has to recreate a VLR entry in the VLR 36 with the wireless unit 42's same profile or registration information.

### SUMMARY OF THE INVENTION

The present invention involves retaining the registration information of a wireless unit in a visited system when the wireless unit registers in another system, so the registration information can be used if the wireless unit returns to the visited system. For example, when the wireless unit registers with the other system, such as a second visited system for a second geographic service area, the registration system can delay the deleting of the registration information of the wireless unit at the visited system, such as a first visited system for a first geographic service area. After receiving the registration cancellation from a home system, the first visited system for the first geographic service area can time stamp the registration information for the wireless unit and retain the registration information for the wireless unit for at least an interval of time. If the wireless unit returns to the first geographic service area, the first visited system uses the registration information retained for the wireless unit. Accordingly, the wireless unit's profile need not be sent to the first visited system, and the first visited system need not be updated again.

### BRIEF DESCRIPTION OF THE DRAWINGS

Other aspects and advantages of the present invention may become apparent upon reading the following detailed description and upon reference to the drawings in which:
FIG. 1 shows a general diagram of a wireless communications system; and
FIG. 2 shows a flow diagram showing an embodiment of the registration system according to the principles of the present invention.

### DETAILED DESCRIPTION

An illustrative embodiment of a registration system according to the principles of the present invention is described below. With particular reference to FIG 1, a wireless unit 42 is in the border region 40 between the geographic service area 14 of the MSC 20 and the geographic service area 16 of the MSC 24. In this example, the wireless unit 42 is registered with a first visited system for the first geographic service area 16, for example with the MSC 24. As such, the VLR 36 has an entry with the registration information for the wireless unit 42, such as the wireless unit's customer profile, received from the HLR of the wireless unit 42 (which could be the HLR 34 if the MSC 20 is the wireless unit's home MSC). Because of the changing radio transmission paths between the wireless unit and cells of the different MSCs 20 and 24 being affected by a variety of conditions, the wireless unit 42 can register alternately and at a rapid rate between the two MSCs 20 and 24. In this example, if, after registering with the MSC 24 of the first geographic service area 16, the wireless unit 42 attempts to register with a second visited system, for example with the MSC 20 for the second geographic service area 14, the first visited system maintains the registration information for the wireless unit 42 in the VLR 36.

Depending on the embodiment, the term "first visited system" or "first system" can include the MSC 24, the VLR 36 and/or any other components or equipment, such as the base station(s) 26, HLR 50 or AC 52, or other system architectures providing the functionality to communicate with the wireless units in the first geographic service area 16. The term "second visited system" or "second system" can include the MSC 20, the HLR 34 and/or any other components or equipment, such as the base station(s) 22, the AC 35, or the VLR 54, or other system architectures providing the functionality to provide communications with wireless units in the second geographic service area 14. The term "home system" can include the home MSC, the HLR and/or any other components or equipment, or other system architectures providing the functionality to provide communications with wireless units in the geographic service area in which the wireless unit 42 is deemed to reside and to enable the wireless unit 42 to roam to other geographic service areas. The second visited system or the second system can be the same as the home system.

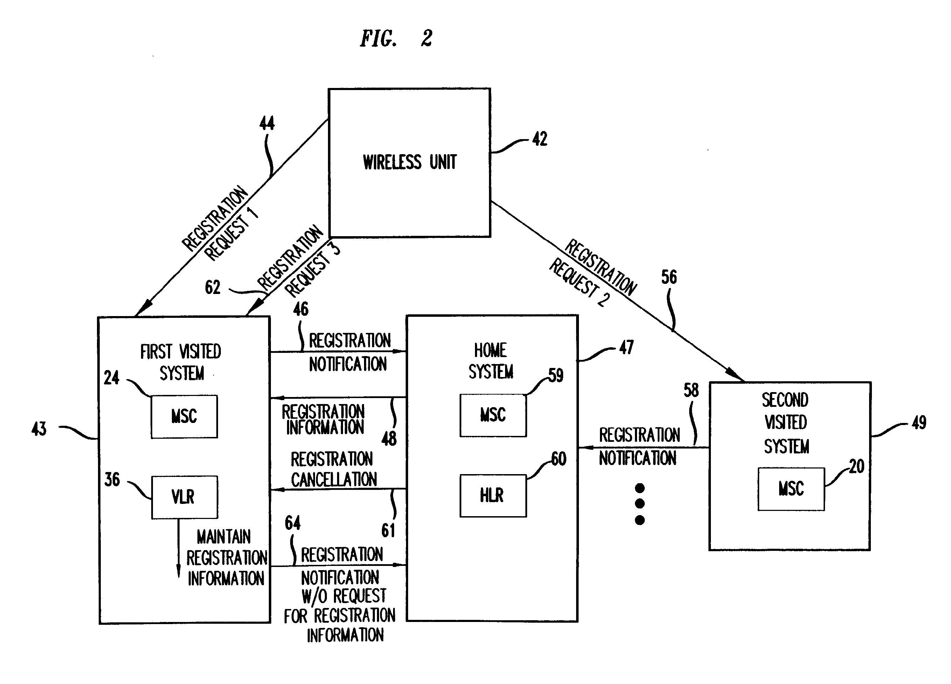

FIG. 2 shows an embodiment of the inter-system registration system according to the principles of the present invention. In this embodiment, the wireless unit 42 registers with a first visited system 43, for example with the VLR 36 (FIG. 1) of the MSC 24 (FIG. 1) for the first geographic service area 16 (FIG. 1). As shown in FIG. 2, the wireless unit 42 sends a first registration request 44 to the first visited system 43, and the first visited system 43 sends a registration notification 46 to a home system 47. If the wireless unit 42 is authentic, the home system 47 sends a registration information message 48 to the first visited system 43 containing the registration information for the wireless unit 42. In response to the registration information message, the first visited system 43 stores the registration information for the wireless unit 42, for example in an entry for the wireless unit 42 in the VLR 36.

Because of the changing radio transmission paths between the wireless unit and the cells of the first visited system 43 and a second visited system 49, the wireless unit 42 can detect signals from the second visited system 49 as being stronger than those from the first visited system 43. Accordingly, the wireless unit 42 attempts to register with the second visited system 49, for example with the MSC 20 (FIG. 1) of the second geographic service area 14 (FIG. 1), by sending a second registration request 56. In this example, for the wireless unit 42 to register with the MSC 20 of the second geographic service area 14, the second visited system 49, for example MSC 20, sends a registration notification 58 to the wireless unit's home system 47, for example to a home MSC 59. If the second visited system is the home system, then the registration request 56 would be to the home system 47, and there would be no registration notification 58 from the second visited system 49 because the home system would know that the wireless unit 42 is attempting to register with the home system 47.

In the embodiment of FIG. 2, since the MSC 20 for the second geographic service area 14 is different than the MSC 24 for the first geographic service area 16 designated in the Last Seen Pointer (LSP) of a HLR 60, the HLR 60 of the home system 47 sends a registration cancellation 61 to the first visited system 43, for example to the MSC 24 for the VLR 36 of the first geographic service area 16. Rather than deleting the VLR entry for the wireless unit 42 after receiving the registration cancellation 61, the VLR 36 maintains the VLR entry for the wireless unit 42. In this embodiment, the previous VLR 36 delays deleting the VLR entry with the registration information for the wireless unit 42. For example, the previous VLR 36 can wait 1 minute before deleting the registration information for the wireless unit 42. When the VLR entry for the wireless unit 42 is deleted and/or the amount of time to wait before the VLR entry is deleted can be pre-determined or vary based on the registration traffic, on the location of the wireless unit, on the particular wireless unit and/or other factors, such as current or pre-determined system conditions.

Determining when the VLR entry for the wireless unit 42 is deleted and/or how long the VLR entry is maintained can depend on the feature set for the wireless unit 42. For example, if the wireless unit 42 has voice messaging, short message service or call forwarding, the time waited by the VLR 36 before deleting the VLR entry for the wireless unit 42 at the first visited system 43 can be decreased, or the VLR entry for the wireless unit 42 can be immediately deleted. Moreover, any features for the wireless unit 42 using a message waiting light or indicator on the wireless unit 42 can cause a decrease in the delay for deleting the VLR entry for the wireless unit 42 because the delay might cause the message waiting light or indicator not to be activated in a timely manner.

Determining when the VLR entry for the wireless unit 42 is deleted and/or how long the VLR entry is maintained can depend on the traffic or occupancy of the available bandwidth in the signaling network, such as the SS-7 network. For example, when the occupancy of the SS-7 network is above a threshold, such as 90% of the available bandwidth, the VLR 36 can delay the deletion of the VLR entry for the wireless unit 42 at the first visited system 43. When the occupancy level of the SS-7 network is below a threshold, for example 90% of the available bandwidth, the VLR 36 can immediately delete the VLR entry for the wireless unit 42 at the first visited system 43. Depending on the embodiment, multiple occupancy levels associated with respective delays or the occupancy level as a parameter can be used to determine whether and/or how long the VLR entry is maintained for the wireless unit 42.

Additionally, determining when the VLR entry for the wireless unit 42 is deleted and/or how long the VLR entry is maintained can depend on the location of the wireless unit or the particular cells from where the wireless unit 42 is coming. For example, if a particular border region is characterized as having a lot of ping-pong effect between the first and second visited systems 43 and 49, the VLR entry for the wireless unit 42 coming from that particular region and/or cell(s) is not deleted immediately by the VLR 36 but maintained so that the VLR entry can be re-used if the wireless unit re-registers with the first visited system. Moreover, if the region and/or cells from which the wireless unit 42 is coming has a very low incidence of ping-pong effect, the VLR 36 can immediately delete the VLR entry for the wireless unit 42 or wait a shorter period of time before deleting the VLR entry.

Depending on the embodiment, determining when the VLR entry for the wireless unit 42 is deleted and/or how long the VLR entry is maintained can depend on any, all, or some of the above factors in addition to others. Alternatively, the VLR 36 can wait an indefinite period of time before deleting the VLR entry 36 for the wireless unit 42, or the VLR 36 can keep the registration information for the wireless unit 42, for example by storing the registration information or a subset thereof for the wireless unit 42 as having an inactive status. For example, the wireless unit 42 can roam to the first visited system 43 and have no services in the first visited system 43 which could be effected by the delay in deleting the VLR entry, such as call forwarding, voice messaging or short message services. Therefore, if the wireless unit 42 has a subset of services in the first visited system 43 compared to the second visited system 49, the VLR entry 42 for the wireless unit 42 could be retained longer, indefinitely and/or as having an inactive status.

If the wireless unit 42 re-appears in the first geographic service area 16 (FIG. 1) of the first visited system 43, the wireless unit 42 attempts to register with the MSC 24 of the first visited system 43 for the first geographic service area 16, for example with a third registration request 62 to the first visited system. When the wireless unit 42 attempts to register with the MSC 24 of the first visited system 43, the first visited system 43, for example the VLR 36, searches for the retained registration information or the VLR entry for the wireless unit 42. If the VLR 36 finds the retained registration information, the VLR 36 revives or simply uses the retained registration information. Accordingly, the VLR 36 need not request the wireless unit's registration information or profile from the home system 47. The VLR 36 can then simply re-activate the VLR entry or treat the VLR entry as a normal VLR entry which is not deleted until the wireless unit 42 registers with another system. Accordingly, the HLR 60 of the home system 47 need not send the wireless unit's registration information or profile, and the VLR 36 of the first visited system 43 need not re-create a VLR entry with the registration information of the wireless unit 42.

The VLR 36 of the first visited system 43 can notify the HLR 60 of the home system 47 that the wireless unit 42 has registered in the VLR 36, for example by sending a registration notification signal 64 without requesting the registration information for the wireless unit 42. The first visited system 43 can send a registration notification requesting that the registration information for the wireless unit 42 not be sent, or the home system 43 may know not to send registration information for the wireless unit 42 in response to the registration notification. If the period during which the first visited system 43 retains the registration information or a portion thereof expires with no registration requests received by the first visited system from the wireless unit 42, the registration information in the VLR 36 is deleted, and a subsequent registration request from the wireless unit 42 to the first visited system can be handled by re-creating an entry for the wireless unit 42 in the VLR 36 with registration information received from the home system.

In addition to the embodiment described above, alternative configurations of the inter-system registration system according to the principles of the present invention are possible which omit and/or add components and/or use variations or portions of the described system. The registration system according to the principles of the present invention and portions thereof can be performed in different parts of the described wireless communications system 10. For example, the portions of the registration system where the VLR entry is maintained rather than immediately deleted is described as occurring in the VLR 36, for example in response to a registration cancellation according to the standard identified as IS-41. As such, the example registration system can be VLR independent in that the registration system can be performed in the VLR without any change in the existing signaling with the VLR 36. Embodiments of the registration system and portions thereof can be performed in other portions of the first visited system, and the registration system could be system independent in that signals to the first visited system need not change during inter-system registrations but intra-system signaling and operation could change. In other embodiments, the signaling and/or operation between the first visited system, the second visited system and/or the home system can be changed, and the registration system configured to maintain the registration information of the wireless unit 42 for a first visited system after the wireless unit registers with a second or home system so that the first visited system can resurrect the registration information or a portion thereof if the wireless unit 42 re-enters the first visited system.

Depending on the embodiment, the geographic service areas 14 and 16 can be under the control of the same or different service providers. Depending on the particular wireless communications system or embodiment, the appropriate registration information, such as customer profile or portions thereof can be stored in different databases, such as a stand-alone HLR (SHLR), the AC, a central database and/or databases distributed throughout the wireless communications system for the wireless unit. Different portions or forms of the existing subscriber information or profile can be sent to different storage or system locations. The manner of transferring, copying, storing and/or sending existing registration information between and within the home system, the first visited system and/or the second visited system depends on the particular application. For example, the existing registration information can be stored in a variety of manners and locations, and once the registration information is transferred for use in first and/or second visited system, the manner in which the information is stored manipulated, augmented and deployed can also vary. For example, certain portions of the registration information making up a VLR entry can be retained while other portions of the registration information deleted, and if the wireless unit re-registers with the visited system, the visited system could request portion(s) of the registration information, for example the portions of the registration information which were deleted.

Depending on the embodiment, components of the registration system and of the home system, the first visited system and/or the second visited system can be added, moved, changed or omitted. For example, the respective HLRs, VLRs, ACs and/or MSCs can be co-located at the respective MSCs or remotely accessed. The components of the registration system and/or of the wireless communications system can be distributed at different locations throughout the wireless communications system or at a single location therein. Additionally, the registration system can transfer and/or modify existing registration information directly from an HLR and/or subscriber database of the home system to the HLRs, VLRs, subscriber and/or other databases of the first and/or second visited systems.

As would be understood by one of ordinary skill in the art, not all of the existing registration information stored in the home system needs to be transferred to the first and/or second visited system. Moreover, the existing registration information can be modified or provided to the first and/or second visited system in different forms. Furthermore, the registration system has been described using a particular configuration of functional components, but it should be understood that the registration system can be implemented in different configurations and portions thereof can be implemented in application specific integrated circuits, software-driven processing circuitry, firmware, programmable logic devices, hardware and/or arrangements of discrete components as would be understood by one of ordinary skill in the art with the benefit of this disclosure. What has been described is merely illustrative of the application of the principles of the present invention. Those skilled in the art will readily recognize that these and various other modifications, arrangements and methods can be made to the present invention without strictly following the exemplary applications illustrated and described herein and without departing from the spirit and scope of the present invention.

## Claims

1. A method of registering a wireless unit (42) with a first visited system (43), said method **CHARACTERIZED BY**:
retaining registration information of a wireless unit (42) for said first visited system (43) when the wireless unit registers with a second system (47, 49); and
using said registration information if said wireless unit registers with said first visited system (42).

2. The method of claim 1 **CHARACTERIZED IN THAT** said retaining including:
retaining said registration information of said wireless unit (42) for a time period after said wireless unit (42) registers in said second system (49).

3. The method of claim 1 **CHARACTERIZED BY**:
obtaining said registration information of said wireless unit (42) for said first visited system (43) when said wireless unit previously registers in said first visited system (43).

4. The method of claim 3 **CHARACTERIZED IN THAT** said obtaining including:
detecting said wireless unit in a first geographic service area (16);
sending a request to a home system (47) for registration information for said wireless unit; and
receiving said registration information by said first visited system (43) for a first geographic service area (16).

5. The method of claim 4 **CHARACTERIZED BY**:
receiving a registration cancellation (61) by said first visited system (43) from said home system (47) after said wireless unit (42) attempts to register with said second system (49) for a second geographic service area.

6. The method of claim 5 **CHARACTERIZED BY** said retaining including:
delaying the deletion of said registration information by said first visited system (43) after receiving said registration cancellation (61) from said home system (47).

7. The method of claim 5 **CHARACTERIZED BY**:
receiving by said home system (47) after said wireless unit (42) is detected in said second geographic service area, a registration notification (58) including second system identification information identifying said second system (49) for said second geographic service area;
comparing said second system identification information with previous identification information at said home system (47) identifying the previous system with which said wireless unit was registered; and
sending of said registration cancellation (61) by said home system (47) to said first visited system (43) if the second system identification is different than said previous identification information.

8. The method of claim 5 **CHARACTERIZED BY**:
detecting by said first visited system (43) said wireless unit (42) in said first geographic service area (16);
searching by said first visited system (43) for said registration information of said wireless unit; and
sending a message to said home system confirming registration of said wireless unit with said first visited system without requesting registration information if said registration information is found.

9. The method of claim 7 **CHARACTERIZED BY**:
storing said second system identification information as said previous system identification information.
